Europäisches Patentamt

European Patent Office

Office européen des brevets

(19)

(11) Veröffentlichungsnummer: **0 014 414**

**A1**

(12) **EUROPÄISCHE PATENTANMELDUNG**

(21) Anmeldenummer: 80100432.6

(22) Anmeldetag: 28.01.80

(51) Int. Cl.³: **H 02 G 11/02**

(30) Priorität: 09.02.79 DE 2904966

(43) Veröffentlichungstag der Anmeldung:
20.08.80 Patentblatt 80/17

(84) Benannte Vertragsstaaten:
AT DE FR GB NL SE

(71) Anmelder: SIEMENS AKTIENGESELLSCHAFT Berlin
und München
Postfach 22 02 61
D-8000 München 22(DE)

(72) Erfinder: Sykora, Vladimir
Nürnberger Strasse 16
D-8740 Bad Neustadt(DE)

(54) In einem Gerätegehäuse eingebaute Kabeltrommel mit einer Bremsanordnung.

(57) Die Erfindung betrifft eine in einem Gerätegehäuse eingebaute Kabeltrommel mit Bremsanordnung. Die Bremsanordnung weist einen verschwenkbar angeordneten, zweiarmigen Bremshebel auf, der mit seinem ersten Arm durch eine Torsionsfeder an dem Kabel anliegt, sowie beim Abrollen des Kabels durch Krafteinwirkung zur Schonung des Kabels verschwenkbar ist. Um den Bremshebel beim Abrollen des Kabels (1) vollständig von dem Kabel abzuheben, wird vorgeschlagen, daß an dem zweiten Arm (8) ein Verstellelement (5) angeordnet ist, das durch die Kraft einer Feder (6) gegen die eine Seitenwand (3) der Kabeltrommel (2) verschwenkbar ist und an dieser anliegt. Die beim Abrollen des Kabels (1) auftretende Reibungskraft und die Kraft der Feder (6) sind so abgestimmt, daß das von diesen beiden Kräften ausgeübte Summenknickmoment größer als das von der Torsionsfeder (18) ausgeübte Moment ist. Damit wird beim Abrollen des Kabels (1) der Bremshebel (9) vollständig von dem Kabel abgehoben.

FIG 1

0014414

SIEMENS AKTIENGESELLSCHAFT     Unser Zeichen
Berlin und München            VPA 79 P 3 0 1 9 EUR

In einem Gerätegehäuse eingebaute Kabeltrommel mit
einer Bremsanordnung für das aufwickelbare Kabel

Die Erfindung bezieht sich auf eine in einem Gerätegehäuse eingebaute Kabeltrommel mit einer Bremsanordnung
für das aufwickelbare Kabel, bei der die Bremsanordnung
einen in einer Auslaßöffnung des Gerätegehäuses verschwenkbar angeordneten, zweiarmigen Bremshebel aufweist,
der mit seinem ersten Arm durch die Kraft einer Torsionsfeder in Bremsstellung an dem Kabel anliegt sowie beim
Abrollen des Kabels durch Krafteinwirkung auf seinen
zweiten Arm entgegen der Bremsstellung verschwenkbar
ist, dessen Bremsstellung ferner durch einen mit dem
zweiten Arm in Eingriff bringbaren Auslöseknopf entriegelbar ist.

Eine solche Kabeltrommel ist durch das DE-GM 78 22 258
bekannt. Um beim Abrollen des Kabels die Reibung zwischen
diesem und dem Bremshebel zu vermindern, ist bei der
bekannten Kabeltrommel an dem zweiten Arm des Bremshebels
ein Querstab vorgesehen, über den das Kabel geführt wird.

M1 2 Syr / 23.1.1979

Beim Abrollen des Kabels wird dieses gespannt und drückt auf den Querstab, so daß der Bremshebel entgegen der Kraft der Torsionsfeder etwas verschwenkt wird. Hierdurch wird zwar die Reibung zwischen dem Kabel und dem ersten Arm des Bremshebels vermindert, jedoch nicht vollkommen aufgehoben.

Der Erfindung liegt die Aufgabe zugrunde, eine Kabeltrommel der eingangs beschriebenen Art so zu gestalten, daß der Bremshebel mit seinem ersten Arm vollkommen von dem Kabel abgehoben wird.

Die Lösung der gestellten Aufgabe gelingt bei einer Kabeltrommel der eingangs beschriebenen Art nach der Erfindung dadurch, daß an dem zweiten Arm ein Verstellelement nach Art eines Knickhebels angeordnet ist, das durch die Kraft einer Feder gegen die eine Seitenwand der Kabeltrommel verschwenkbar ist und an dieser anliegt, wobei die Berührungsstelle des Verstellelementes mit der Seitenwand gegenüber der in der Strecklage gemeinsamen Mittellinie des zweiten Armes und des Verstellelementes seitlich versetzt und der Verschwenkwinkel desselben durch einen Anschlag begrenzt ist, daß ferner das auf den Bremshebel ausgeübte Moment der Torsionsfeder größer als das auf diesen ausgeübte Knickmoment der Feder und kleiner als das von der Feder und der beim Abrollen des Kabels auftretenden Reibungskraft auf diesen ausgeübte Summenknickmoment ist. Durch diese Ausgestaltung der der Kabeltrommel zugeordneten Bremsanordnung wird das Verstellelement beim Abrollen des Kabels durch die zwischen dem Verstellelement und der Kabeltrommel auftretende Reibungskraft und die Kraft der Feder zur Seitenwand der Kabeltrommel hin verschwenkt. Da das Verstellelement an der Seitenwand anliegt, wird der zweite Arm des Bremshebels entgegen der Kraft der Torsionsfeder verstellt, so daß der erste Arm des Bremshebels vollkommen von dem Kabel abgehoben wird.

Eine besonders einfache Ausführungsform der Kabeltrommel ergibt sich dadurch, daß als Feder eine Zugfeder vorgesehen ist, die mit ihrem einen Ende an einer zwischen der Schwenkachse des Bremshebels und der Schwenkachse des Verstellelementes am zweiten Arm vorgesehenen Lasche und mit ihrem anderen Ende an dem Verstellelement befestigt ist. Weiterhin ist es vorteilhaft, daß auf der dem zweiten Arm zugewandten Seite des Verstellelementes als Anschlag ein Vorsprung ausgebildet ist, der beim Verschwenken des Verstellelementes mit der Seitenkante des zweiten Armes in Eingriff kommt. Durch derartige Ausgestaltungen der Kabeltrommel wird erreicht, daß alle für die Funktion des Bremshebels bedingten Elemente an der Bremsanordnung vorgesehen sind, so daß an den übrigen Teilen, insbesondere an der Kabeltrommel und dem Gerätegehäuse, keinerlei Änderungen für das Anbringen der beschriebenen Bremsanordnung vorgenommen werden müssen.

Eine platzsparende Ausführungsform ergibt sich dadurch, daß auf der verlängerten Schwenkachse des Verstellelementes als Feder eine Schenkelfeder angeordnet ist, die mit ihrem einen Schenkel am zweiten Arm des Bremshebels und mit ihrem anderen Schenkel am seitlich vorragenden Anschlag des Verstellelementes abgestützt ist.

Die Funktionssicherheit beim Lösen des Bremshebels wird dadurch erhöht, daß auf der an der einen Seitenwand der Kabeltrommel anliegenden Seite des Verstellelementes eine Nase vorgesehen ist, die in entsprechende Randausnehmungen der Seitenwand eingreift, wobei die Nase auf der beim Abwickeln des Kabels beanspruchten Seite eine schräge Flanke aufweist.

Anhand eines in der Zeichnung dargestellten Ausführungsbeispieles wird der Anmeldungsgegenstand nachfolgend näher beschrieben.

0014414

- 4 - VPA 79 P 3019 EUR

Es zeigt:

Fig. 1 eine Kabeltrommel mit Bremsanordnung, bei der das Verstellelement mittels einer Zugfeder verschwenkbar ist, in Seitenansicht,

Fig. 2 eine Draufsicht der in Fig. 1 dargestellten Kabeltrommel mit Bremsanordnung,

Fig. 3 eine Kabeltrommel mit Bremsanordnung, bei der das Verstellelement mittels einer Schenkelfeder verschwenkbar ist, in Seitenansicht,

Fig. 4 eine Kabeltrommel mit Bremsanordnung, bei der am Verstellelement eine in Randausnehmungen der Kabeltrommelseitenwand ragende Nase angeformt ist, in Seitenansicht und

Fig. 5 eine Draufsicht der in Fig. 4 dargestellten Kabeltrommel mit Bremsanordnung.

Mit 1 ist ein auf einer Kabeltrommel 2 aufwickelbares Kabel bezeichnet. Die Kabeltrommel 2 besitzt zwei Seitenwände 3 und 4. An der in der Zeichnung oberen Seitenwand 3 liegt ein Verstellelement 5 unter der Kraft einer als Zugfeder ausgebildeten Feder 6 an. Die Feder 6 ist mit ihrem einen Ende an einem an dem Verstellelement 5 vorgesehenen Zapfen 7 angehängt und mit ihrem anderen Ende an einer mit dem zweiten Arm 8 eines Bremshebels 9 verbundenen Lasche 10 befestigt. Das Verstellelement 5 ist am Ende 11 des zweiten Armes verschwenkbar gelagert. Der Bremshebel 9 selbst ist in einer Auslaßöffnung 12 eines Gerätegehäuses ebenfalls um eine Schwenkachse 13 verschwenkbar angeordnet. Der Bremshebel 9 besitzt außerdem noch einen ersten Arm 14, der in Bremsstellung an dem Kabel 1 anliegt und dieses gegen die untere Seite 15 der Gehäuseöffnung 12 drückt, so daß dieses nicht von der mit einer Aufrollfeder versehenen Kabeltrommel 2 aufgerollt werden kann. Über der Lasche 10 kann ein Auslöseknopf angeordnet werden, der in der durch einen Pfeil 16 angedeuteten Richtung auf die Lasche 10 einwirkt und somit den Bremshebel im Uhrzeigersinn verschwenkt, so daß der erste Arm 14 von dem Kabel 1 abgehoben wird und dieses durch die Kraft der Aufrollfeder der Kabeltrommel 2 aufgerollt werden kann.

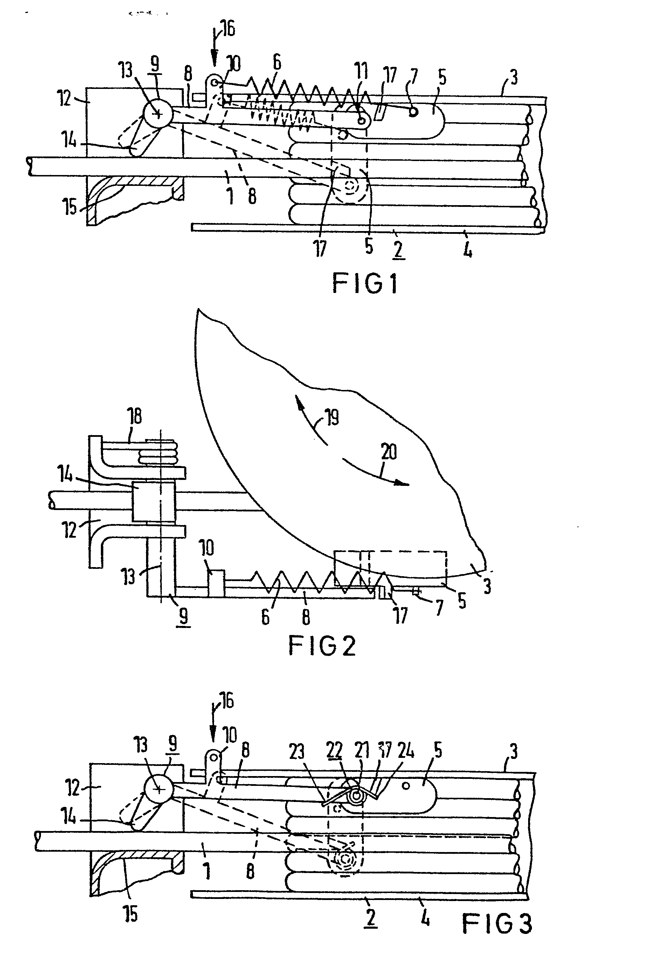

Aus der Draufsicht in Fig. 2 ist insbesondere noch ein an dem Verstellelement 5 angeformter Vorsprung 17 erkennbar, der beim Verschwenken des Verstellelementes 5 auf die Seitenkante des zweiten Armes auftrifft und somit als Anschlag für das Verstellelement 5 dient. Ferner ist auch die den Bremshebel 9 in die Bremsstellung drückende Torsionsfeder 18 erkennbar. Durch einen Pfeil 19 ist die Drehrichtung der Kabeltrommel 2 beim Abrollen des Kabels und durch einen Pfeil 20 die Drehrichtung beim Aufrollen des Kabels angegeben.

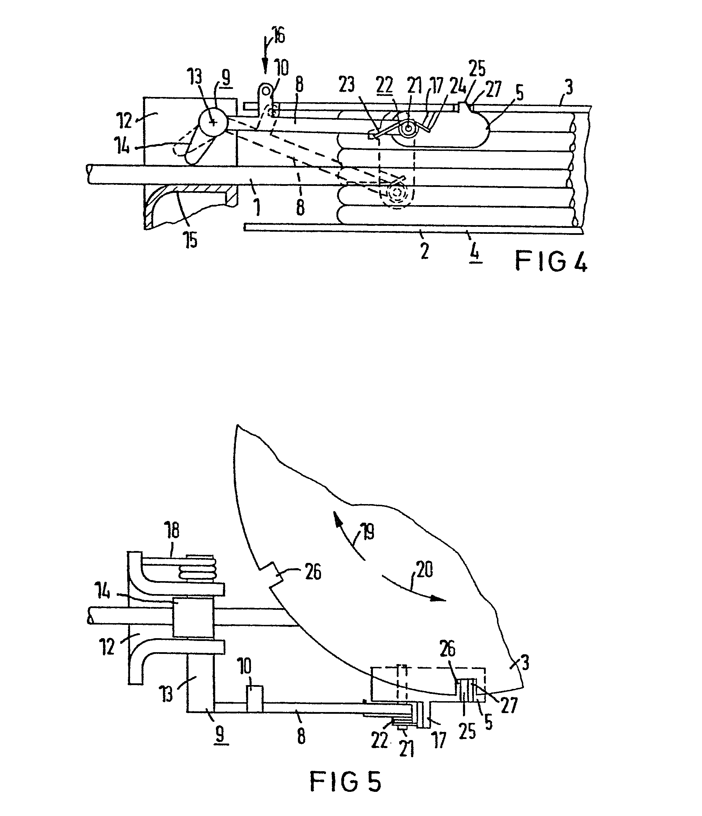

Bei der in Fig. 3 dargestellten Kabeltrommel ist auf der seitlich verlängerten Schwenkachse 21 des Verstellelementes 5 eine Schenkelfeder 22 angeordnet. Der eine Schenkel 23 dieser Schenkelfeder ist an dem zweiten Arm 8 des Bremshebels 9 und der andere Schenkel 24 an dem seitlich vorragenden Anschlag 17 des Verstellelementes 5 abgestützt.

Beim Herausziehen des Kabels 1 wird die Kabeltrommel 2 in der durch den Pfeil 19 gekennzeichneten Richtung gedreht. Hierbei tritt zwischen dem an der Seitenwand 3 anliegenden Verstellelement 5 und dieser Seitenwand eine Reibungskraft auf, die zusammen mit der Zugfeder 6 bzw. Schenkelfeder 22 ein Moment auf das Verstellelement 5 ausübt. Da die Torsionsfeder 18 so dimensioniert ist, daß das von ihr auf den Bremshebel 9 ausgeübte Moment kleiner als dieses Summenknickmoment ist, wird das Verstellelement 5 in Richtung auf die Seitenwand 3 zu verschwenkt. Hierbei liegt das Verstellelement 5 an der Seitenwand 3 an und rollt mit seinem abgerundeten Ende an dieser ab. Durch die Abstützung des Verstellelementes 5 an der Seitenwand 3 bedingt, wird der zweite Arm 8 des Bremshebels 9 beim Verschwenken des Verstellelementes 5 nach unten gedrückt. Dies ist in Fig. 1 gestrichelt dargestellt. Beim Verschwenken des Verstellelementes 5 trifft dessen Vorsprung 17 auf die Seitenkante des zweiten Armes 8 auf, so daß das Verstellelement 5 nicht mehr weiter verstellt werden kann. Die Lage des Vorsprunges 17 ist so gewählt, das das Verstellelement 5 nur bis zu einer gegenüber der Seitenwand 3 senkrechten Lage verschwenkt werden kann. Durch das Nachuntendrücken des zweiten Armes des Bremshebels wird dessen erster Arm 14 vollkommen von dem Kabel 1 abgehoben. Das Kabel 1 kann somit nun berührungsfrei von der Kabeltrommel abgezogen werden. Hierdurch wird sowohl das Kabel 1 als auch die untere Seite 15 der Auslaßöffnung 12 vor einem Abrieb bewahrt. In der Vergangenheit hat es sich gezeigt, daß die untere Seite 15 der Auslaßöffnung durch die ständige starke Reibung soweit abgerieben werden kann, daß mit der Zeit die Bremswirkung des Bremshebels vollkommen aufgehoben wird. Durch die vollkommene Entlastung des Kabels 1 wird auch dieser Mangel beseitigt.

Bei der in den Fig. 4 und 5 gezeigten Kabeltrommel ist an dem Verstellelement 5 auf der der Seitenwand 3 der Kabeltrommel 2 zugekehrten Seite eine Nase 25 angeformt. Diese Nase 25 ragt in Randausnehmungen 26, die an der Seitenwand 3 vorgesehen sind. Die Nase 25 weist ferner auf der Seite, auf die die jeweilige Randausnehmung 26 beim Abwickeln des Kabels 1 auftrifft, eine schräge Flanke 27 auf. Durch diese schräge Flanke ist sichergestellt, daß das Verstellelement beim Abwickeln des Kabels 1 nach unten weggedrückt wird und nicht die Kabeltrommel blockiert. Da infolge des Formschlusses das Verstellelement 5 unabhängig von der Andruckkraft an die Seitenwand in jedem Falle verschwenkt wird, kann eine beliebig starke Torsionsfeder 18 für den Bremshebel 9 verwendet werden. Es besteht somit die Möglichkeit, die Bremswirkung der Anordnung zu erhöhen.

5 Patentansprüche
5 Figuren

Patentansprüche

1. In einem Gerätegehäuse eingebaute Kabeltrommel mit einer Bremsanordnung für das aufwickelbare Kabel, bei der die Bremsanordnung einen in einer Auslaßöffnung des Gerätegehäuses verschwenkbar angeordneten, zweiarmigen Bremshebel aufweist, der mit seinem ersten Arm durch die Kraft einer Torsionsfeder in Bremsstellung an dem Kabel anliegt sowie beim Abrollen des Kabels durch Krafteinwirkung auf seinen zweiten Arm entgegen der Bremsstellung verschwenkbar ist, dessen Bremsstellung ferner durch einen mit dem zweiten Arm in Eingriff bringbaren Auslöseknopf entriegelbar ist, d a d u r c h  g e - k e n n z e i c h n e t , daß an dem zweiten Arm (8) ein Verstellelement (5) nach Art eines Knickhebels angeordnet ist, das durch die Kraft einer Feder (6) gegen die eine Seitenwand (3) der Kabeltrommel (2) verschwenkbar ist und an dieser anliegt, wobei die Berührungsstelle des Verstellelementes (5) mit der Seitenwand (3) gegenüber der in der Strecklage gemeinsamen Mittellinie des zweiten Armes (8) und des Verstellelementes (5) seitlich versetzt und der Verschwenkwinkel desselben durch einen Anschlag (17) begrenzt ist, daß ferner das auf den Bremshebel (9) ausgeübte Moment der Torsionsfeder (18) größer als das auf diesen ausgeübte Knickmoment der Feder (6) und kleiner als das von der Feder (6) und der beim Abrollen des Kabels (1) auftretenden Reibungskraft auf diesen ausgeübte Summenknickmoment ist.

2. Kabeltrommel nach Anspruch 1, d a d u r c h  g e - k e n n z e i c h n e t , daß als Feder (6) eine Zugfeder vorgesehen ist, die mit ihrem einen Ende an einer zwischen der Schwenkachse (13) des Bremshebels und der Schwenkachse des Verstellelementes (5) am zweiten Arm (8) vorgesehenen Lasche (10) und mit ihrem anderen Ende an dem Verstellelement (5) befestigt ist.

3. Kabeltrommel nach Anspruch 1 oder 2, d a d u r c h
g e k e n n z e i c h n e t , daß auf der dem zweiten
Arm (8) zugewandten Seite des Verstellelementes (5) als
Anschlag ein Vorsprung (17) ausgebildet ist, der beim
Verschwenken des Verstellelementes (5) mit der Seitenkante des zweiten Armes (8) in Eingriff kommt.

4. Kabeltrommel nach Anspruch 1, d a d u r c h
g e k e n n z e i c h n e t , daß auf der verlängerten Schwenkachse des Verstellelementes (5) als Feder
eine Schenkelfeder (22) angeordnet ist, die mit ihrem
einen Schenkel (23) am zweiten Arm (8) des Bremshebels
und mit ihrem anderen Schenkel (24) am seitlich vorragenden Anschlag (17) des Verstellelementes (5) abgestützt ist.

5. Kabeltrommel nach Anspruch 1, d a d u r c h
g e k e n n z e i c h n e t , daß auf der an der
einen Seitenwand (3) der Kabeltrommel (2) anliegenden
Seite des Verstellelementes (5) eine Nase (25) vorgesehen ist, die in entsprechende Randausnehmungen (26)
der Seitenwand (3) eingreift, wobei die Nase (25) auf
der beim Abwickeln des Kabels (1) beanspruchten Seite
eine schräge Flanke (27) aufweist.

FIG 1

FIG 2

FIG 3

FIG 4

FIG 5

Europäisches
Patentamt

**EUROPÄISCHER RECHERCHENBERICHT**

Nummer der Anmeldung

EP 80 10 0432

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | DE - U - 7 822 258 (SIEMENS) <br> * Gesamtes Dokument * <br><br> -- | 1 | H 02 G 11/02 |
| A | DE - C - 880 392 (LICENTIA) <br> * Seite 1 * <br><br> -- | 1 | |
| A | US - A - 3 339 030 (ELECTROLUX) <br> * Spalte 2, Zeilen 31-69; Spalten 3-5; Spalte 6, Zeilen 1-20 * <br><br> -- | 1 | **RECHERCHIERTE SACHGEBIETE (Int. Cl. 3)** |
| A | GB - A - 815 740 (BAG SHAWE) <br> * Seite 1, Zeilen 62-88; Seite 2, Zeilen 1-46 * <br><br> ---- | 1 | H 02 G 11/02 <br> 1/18 <br> B 65 H 75/44 <br> A 47 L 9/26 |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-05-1980 | LOMMEL |

EPA form 1503.1 06.78